# EUROPEAN PATENT SPECIFICATION

(11) **EP 4 413 273 B1**
(45) Date of publication and mention of the grant of the patent: **04.11.2026**
(21) Application number: 22879066.3
(22) Date of filing: 29.07.2022
(51) Int. Cl.: F16B 19/00, F16B 21/08, F16B 5/06

(54) **METHOD FOR REDUCING LOCALIZED DEFORMATION IN SNAP-IN FEATURES**
VERFAHREN ZUR REDUZIERUNG LOKALISIERTER VERFORMUNGEN BEI EINSCHNAPPBAREN MERKMALEN
PROCÉDÉ DE RÉDUCTION DE DÉFORMATION LOCALISÉE DANS DES ÉLÉMENTS D'ENCLIQUETAGE

(30) Priority: 07.10.2021 US 202163253358 P
(43) Date of publication of application: 14.08.2024
(73) Proprietor: S&C Electric Company, Chicago, Illinois 60626 (US)
(72) Inventor: STRAUCH, Christopher A., Chicago, Illinois 60613 (US)
(74) Representative: Barker Brettell LLP
(86) International application number: PCT/US2022/038757
(87) International publication number: WO 2023/059394

(56) References cited:
- US-A- 1 830 460
- US-A- 2 104 239
- US-A- 2 143 605
- US-A- 3 611 861
- US-A- 3 905 570
- US-A- 4 576 532
- US-A- 4 973 212
- US-A1- 2004 007 496
- US-A1- 2018 156 256

## Description

### CROSS-REFERENCE TO RELATED APPLICATION

This application claims the benefit of priority from the United States Provisional Application No. 63/253,358, filed on October 7, 2021.

### BACKGROUND

### Filed

This disclosure relates generally to a snap-in link.

### Discussion of the Related Art

Various types of links are known in the art for coupling one device to another device, such as an actuating device and an actuated device. Sometimes these links have a snap-in feature that allows them to be effectively coupled to the devices. The snap-in feature generally requires the link to be designed to allow for elastic deformation of the link when it is assembled without causing permanent deformation of the link and allow for proper retention of the link over time. These designs often employ a taper in the link to obtain these desired qualities. However, for some implementations, the envelope that the link is required to fit in may not be large enough to accommodate the size of the taper required for the loading constraints for a certain size and weight link. Thus, improvements can be made.

US2143605 A discloses fastening means of general application and of the type constructed from relatively thin material of sheet or strip form such as sheet spring steel, sheet metal, cold rolled metal, and the like

### SUMMARY

The present application provides a link for providing a snap-in connection between two devices as defined in claim 1. Optional features are defined in the dependent claims. The following discussion discloses and describes a snap-in link that provides a robust and deformable snap-in connection between two devices. The link includes an elongated portion and a first flexible arm coupled to the elongated portion at one end and having a first snap-in slot at an opposite end, where the first flexible arm is flexible relative to the elongated portion. The first flexible arm includes an outer side, an inner side, a plurality of stress-concentration indentations formed in the outer side and a plurality of stress-concentration indentations formed in the inner side, where a nub is formed in each of the indentations along the outer side. The link also includes a second flexible arm coupled to the elongated portion at one end and having a second snap-in slot at an opposite end, where the second flexible arm is flexible relative to the elongated portion. The second flexible arm also includes an outer side, an inner side, a plurality of stress-concentration indentations formed in the outer side and a plurality of stress-concentration indentations formed in the inner side, where a nub is formed in each of the indentations along the outer side and where the first and second flexible arms define a slot therebetween.

Additional features of the disclosure will become apparent from the following description and appended claims, taken in conjunction with the accompanying drawings.

### BRIEF DESCRIPTION OF THE DRAWINGS

Figure 1 is a front view of a snap-in link;
Figure 2 is a cross-sectional type view of the snap-in link coupling two elements;
Figure 3 is a cross-sectional type view of the snap-in link coupled to a cylinder; and
Figure 4 is a cross-sectional type view of a snap-in link including a ring.

### DETAILED DESCRIPTION OF THE EMBODIMENTS

The following discussion of the embodiments of the disclosure directed to a snap-in link including two opposing cantilever arms defining a slot therebetween and including a series of inside stress-concentration indentations and a series of outside stress-concentration indentations is merely exemplary in nature, and is in no way intended to limit the disclosure or its applications or uses.

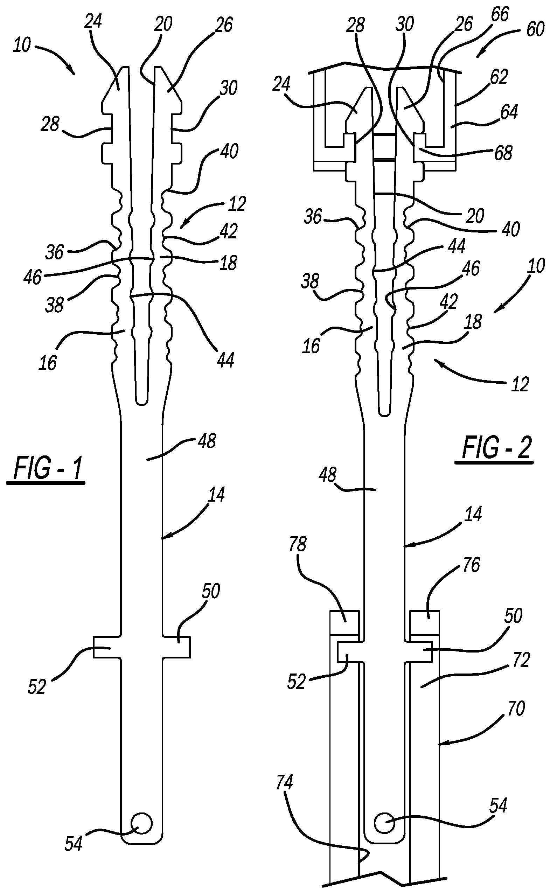

Figure 1 is a front view of a snap-in link 10 including a snap-in portion 12 and a mounting portion 14 that provides a robust and deformable snap-in connection between two devices. The snap-in portion 12 includes a first flexible cantilever arm 16 flexibly formed to the mounting portion 14 and a second flexible cantilever arm 18 flexibly formed to the mounting portion 14, where a slot 20 is defined between the arms 16 and 18. The first cantilever arm 16 includes a top portion 24 defining a slot 28 and the second cantilever arm 18 includes a top portion 26 defining a slot 30. The mounting portion 14 includes a body 48, opposing tabs 50 and 52 and a hole 54. In one embodiment, the link 10 is a single piece of stamped metal, such as carbon steel having a zinc-nickel finish.

A series of stress-concentration indentations 36 are formed along an outer side of the cantilever arm 16 opposite to the slot 20 between the top portion 24 and the mounting portion 14, where each indentation 36 includes a central nub 38 to provide two stress-concentration radii in each indentation 36. Likewise, a series of stress-concentration indentations 40 are formed along an outer side of the cantilever arm 18 opposite to the slot 20 between the top portion 26 and the mounting portion 14, where each indentation 40 includes a central nub 42 to provide two stress-concentration radii in each indentation 40, and where the indentations 36 and 40 are directly across the slot 20 from each other. A series of stress-concentration indentations 44 are formed along an inner side of the cantilever arm 16 facing the slot 20 between the top portion 26 and the mounting portion 14 and a series of stress-concentration indentations 46 are formed along an inner side of the cantilever arm 18 facing the slot 20 between the top portion 26 and the mounting portion 14, where the indentations 44 and 46 are directly across the slot 20 from each other.

In this non-limiting embodiment, there are five of the indentations 36 and 40 and four of the indentations 44 and 46 to provide the desired deformation and strength by distributing bending stresses and deformation throughout the link 10. The secondary radii provided by the nubs 38 and 42 further distribute the stresses within the link 10 by using the additional radii to focus stresses occurring in the indentations 36 and 40 to two points instead of one. Further, the indentations 44 are positioned between or staggered relative to the indentations 36 and the indentations 46 are positioned between or staggered relative the indentations 40, which avoids excessive reduction in cross-section area and tensile strength of the arms 16 and 18. The indentations 36, 40, 44 and 46 can have any suitable radius for the purposes discussed herein to provide the desired stress areas on the link 10. Although all of the indentations 36 and 40 are shown spaced the same distance from a vertical centerline of the link 10, the figures are intended to represent that the indentations 36 and 40 that are horizontally aligned across the slot 20 can be spaced the same distance from the centerline, but each set of horizontally aligned indentations 36 and 40 can be spaced different distances from the centerline to move stresses on the arms 16 and 18 up and down.

Figure 2 is an illustration of a linking assembly 60 showing the link 10 securing a device 62 to a device 70 in a snap-fit engagement. The device 62 includes an outer body 64 defining an inner chamber 66, where a flange or ring 68 extends from the body 64 into the chamber 66. The arms 16 and 18 are flexed together to close the slot 20 and the top portions 24 and 26 are inserted into the chamber 66. The arms 16 and 18 are released so that the ring 68 is inserted into and held within the slots 28 and 30 in the snap-fit engagement, as shown. The device 70 includes an extended sleeve 72 defining a channel 74, where flanges 76 and 78 are provided on opposite sides of the channel 74 at a top end of the sleeve 72. The body 48 is inserted into the channel 74 and the tabs 50 and 52 are positioned against the flanges 76 and 78, respectively, where drawing down on the device 70 puts the link 10 in tension.

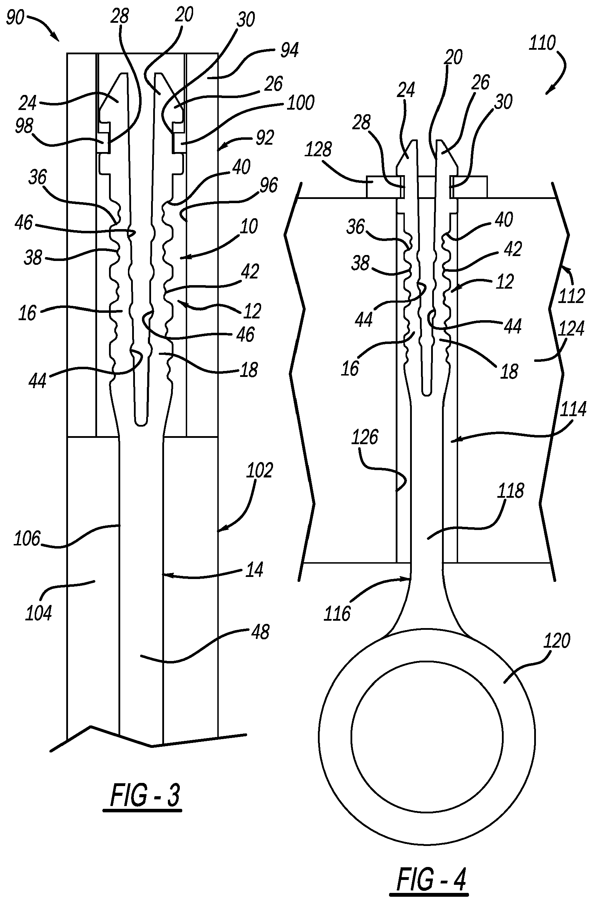

Figure 3 is an illustration of a link assembly 90 showing the link 10 securing a device 92 to a device 102 in a snap-fit engagement. The device 92 includes a body 94 defining a channel 96 with two opposing tabs 98 and 100 extending into the channel 96, and the device 102 includes a body 104 defining a channel 106. The body 48 is inserted into the channel 106 and the snap-in portion 12 is snap-fit to the tabs 98 and 100 in the manner described above.

Figure 4 is an illustration of a link assembly 110 including a device 112 with a link 114 coupled thereto. The link 114 includes the snap-in portion 12, but instead of the snap-in portion 12 being coupled to the mounting portion 14, the snap-in portion 12 is coupled to a bottom portion 116 including a body 118 and a ring 120 coupled thereto. The device 112 includes a body 124 defining a channel 126, where the snap-in portion 12 is inserted into the channel 126 so that the body 124 extends out of the channel 126. The device 112 also includes a ring 128 coupled to the body 118, where the snap-in portion 112 is snap fit to the ring 128 in the manner described above.

The foregoing discussion discloses and describes merely exemplary embodiments of the present disclosure. One skilled in the art will readily recognize from such discussion and from the accompanying drawings and claims that various changes, modifications and variations can be made therein without departing from the scope of the invention which is defined by the appended claims.

## Claims

1. A link (10) for providing a snap-in connection between two devices, the link comprising:
an elongated portion;
a first flexible arm (16) coupled to the elongated portion at one end and having a first snap-in slot (28) at an opposite end, the first flexible arm (16) being flexible relative to the elongated portion, the first flexible arm (16) including a first outer side, a first inner side, a plurality of stress-concentration indentations (36) formed in the first outer side and a plurality of stress-concentration indentations (44) formed in the first inner side; and
a second flexible arm (18) coupled to the elongated portion at one end and having a second snap-in slot (30) at an opposite end, the second flexible arm (18) being flexible relative to the elongated portion, the second flexible arm (18) including a second outer side, a second inner side, a plurality of stress-concentration indentations (40) formed in the second outer side and a plurality of stress-concentration indentations (46) formed in the second inner side, wherein the first and second flexible arms (16, 18) define a slot (20) therebetween,
**characterized in that**
the plurality of stress-concentration indentations (36) in the first outer side of the first flexible arm (16) and the plurality of stress-concentration indentations (44) in the first inner side of the first flexible arm (16) are staggered relative to each other so that a stress-concentration indentation (36) in the outer side is not directly across the first flexible arm (16) from a stress-concentration indentation (44) in the inner side, and wherein the plurality of stress-concentration indentations (40) in the second outer side of the second flexible arm (18) and the plurality of stress-concentration indentations (46) in the second inner side of the second flexible arm (18) are staggered relative to each other so that a stress-concentration indentation (40) in the outer side is not directly across the second flexible arm (18) from a stress-concentration indentation (46) in the inner side.

2. The link (10) according to claim 1, wherein a nub (38, 42) is formed in each of the plurality of stress-concentration indentations (36) in the first outer side of the first flexible arm (16) and each of the plurality of stress-concentration indentations (40) in the second outer side of the second flexible arm (18) to provide two radii in each of the indentations.

3. The link (10) according to claim 1, wherein the stress-concentration indentations (36) in the first outer side of the first flexible arm (16) and the stress-concentration indentations (40) in the second outer side of the second flexible arm (18) are directly across from each other and are equally spaced from a centerline of the link.

4. The link (10) according to claim 3, wherein all of the stress-concentration indentations (36, 40) in the first outer side of the first flexible arm (16) and the second outer side of the second flexible arm (18) are the same distance from the centerline; or
wherein some of the stress-concentration indentations (36, 40) in the first outer side of the first flexible arm (16) and the second outer side of the second flexible arm (18) that are not directly across from each other have different distances from the centerline.

5. The link (10) according to claim 1, wherein the plurality of stress-concentration indentations (44) in the first inner side of the first flexible arm (16) and the plurality of stress-concentration indentations (46) in the second inner side of the second flexible arm (18) are directly across from each other; or
wherein the plurality of stress-concentration indentations (36) in the first outer side of the first flexible arm (16) is five stress-concentration indentations and the plurality of stress-concentration indentations (40) in the second outer side of the second flexible arm (18) is five stress-concentration indentations; or
wherein the plurality of stress-concentration indentations (44) in the first inner side of the first flexible arm (16) is four stress-concentration indentations and the plurality of stress-concentration indentations (46) in the second inner side of the second flexible arm (18) is four stress-concentration indentations.

6. The link (10) according to claim 1, wherein elongated portion includes two opposing tabs (50, 52).

7. The link (10) according to claim 1, wherein the link (10) is a single piece of stamped metal.

8. The link (10) according to claim 1, wherein:
a nub (38) is formed in each of the plurality of stress-concentration indentations (36) in the first outer side of the first flexible arm (16);
a nub (42) is formed in each of the plurality of stress-concentration indentations (40) in the second outer side of the second flexible arm (18);
the plurality of stress-concentration indentations (36) in the first outer side of the first flexible arm (16) and the plurality of stress-concentration indentations (40) in the second outer side of the second flexible arm (18) are directly across from each other; and
the plurality of stress-concentration indentations (44) in the first inner side of the first flexible arm (16) and the plurality of stress-concentration indentations (46) in the second inner side of the second flexible arm (18) are directly across from each other.

9. The link (10) according to claim 8, wherein the plurality of stress-concentration indentations (36) in the first outer side of the first flexible arm (16) is five stress-concentration indentations and the plurality of stress-concentration indentations (40) in the second outer side of the second flexible arm (18) is five stress-concentration indentations; or
wherein the plurality of stress-concentration indentations (44) in the first inner side of the first flexible arm (16) is four stress-concentration indentations and the plurality of stress-concentration indentations (46) in the second inner side of the second flexible arm (18) is four stress-concentration indentations; or
wherein elongated portion includes two opposing tabs (50, 52).

## Patentansprüche

1. Verbindung (10) zum Bereitstellen einer Rastverbindung zwischen zwei Vorrichtungen, wobei die Verbindung umfasst:
einen länglichen Abschnitt;
einen ersten flexiblen Arm (16), der an einem Ende mit dem länglichen Abschnitt gekoppelt ist und an einem gegenüberliegenden Ende einen ersten Rastschlitz (28) aufweist, wobei der erste flexible Arm (16) in Bezug auf den länglichen Abschnitt flexibel ist und der erste flexible Arm (16) eine erste Außenseite, eine erste Innenseite, eine Mehrzahl von Spannungskonzentrationsvertiefungen (36), die in der ersten Außenseite gebildet sind, und eine Mehrzahl von Spannungskonzentrationsvertiefungen (44), die in der ersten Innenseite gebildet sind, beinhaltet; und
einen zweiten flexiblen Arm (18), der an einem Ende mit dem länglichen Abschnitt gekoppelt ist und an einem gegenüberliegenden Ende einen zweiten Rastschlitz (30) aufweist, wobei der zweite flexible Arm (18) in Bezug auf den länglichen Abschnitt flexibel ist, wobei der zweite flexible Arm (18) eine zweite Außenseite, eine zweite Innenseite, eine Mehrzahl von Spannungskonzentrationsvertiefungen (40), die in der zweiten Außenseite gebildet sind, und eine Mehrzahl von Spannungskonzentrationsvertiefungen (46), die in der zweiten Innenseite gebildet sind, beinhaltet, wobei der erste und der zweite flexible Arm (16, 18) einen Schlitz (20) dazwischen definieren,
**dadurch gekennzeichnet, dass** die Mehrzahl von Spannungskonzentrationsvertiefungen (36) in der ersten Außenseite des ersten flexiblen Arms (16) und die Mehrzahl von Spannungskonzentrationsvertiefungen (44) in der ersten Innenseite des ersten flexiblen Arms (16) relativ zueinander versetzt sind, sodass sich eine Spannungskonzentrationsvertiefung (36) in der Außenseite nicht direkt über den ersten flexiblen Arm (16) von einer Spannungskonzentrationsvertiefung (44) in der Innenseite befindet, und wobei die Mehrzahl von Spannungskonzentrationsvertiefungen (40) in der zweiten Außenseite des zweiten flexiblen Arms (18) und die Mehrzahl von Spannungskonzentrationsvertiefungen (46) in der zweiten Innenseite des zweiten flexiblen Arms (18) relativ zueinander versetzt sind, sodass sich eine Spannungskonzentrationsvertiefung (40) in der Außenseite nicht direkt über den zweiten flexiblen Arm (18) von einer Spannungskonzentrationsvertiefung (46) in der Innenseite befindet.

2. Verbindung (10) nach Anspruch 1, wobei eine Nase (38, 42) in jede der Mehrzahl von Spannungskonzentrationsvertiefungen (36) in der ersten Außenseite des ersten flexiblen Arms (16) und jede der Mehrzahl von Spannungskonzentrationsvertiefungen (40) in der zweiten Außenseite des zweiten flexiblen Arms (18) gebildet ist, um zwei Radien in jeder der Vertiefungen bereitzustellen.

3. Verbindung (10) nach Anspruch 1, wobei die Spannungskonzentrationsvertiefungen (36) in der ersten Außenseite des ersten flexiblen Arms (16) und die Spannungskonzentrationsvertiefungen (40) in der zweiten Außenseite des zweiten flexiblen Arms (18) einander unmittelbar gegenüber liegen und gleichmäßig von einer Mittellinie der Verbindung beabstandet sind.

4. Verbindung (10) nach Anspruch 3, wobei alle Spannungskonzentrationsvertiefungen (36, 40) in der ersten Außenseite des ersten flexiblen Arms (16) und der zweiten Außenseite des zweiten flexiblen Arms (18) den gleichen Abstand zu der Mittellinie aufweisen; oder
wobei einige der Spannungskonzentrationsvertiefungen (36, 40) in der ersten Außenseite des ersten flexiblen Arms (16) und der zweiten Außenseite des zweiten flexiblen Arms (18), die einander nicht unmittelbar gegenüberliegen, unterschiedliche Abstände zu der Mittellinie aufweisen.

5. Verbindung (10) nach Anspruch 1, wobei die Mehrzahl von Spannungskonzentrationsvertiefungen (44) in der ersten Innenseite des ersten flexiblen Arms (16) und die Mehrzahl von Spannungskonzentrationsvertiefungen (46) in der zweiten Innenseite des zweiten flexiblen Arms (18) einander unmittelbar gegenüberliegen; oder
wobei die Mehrzahl von Spannungskonzentrationsvertiefungen (36) in der ersten Außenseite des ersten flexiblen Arms (16) fünf Spannungskonzentrationsvertiefungen ist und die Mehrzahl von Spannungskonzentrationsvertiefungen (40) in der zweiten Außenseite des zweiten flexiblen Arms (18) fünf Spannungskonzentrationsvertiefungen ist; oder
wobei die Mehrzahl von Spannungskonzentrationsvertiefungen (44) in der ersten Innenseite des ersten flexiblen Arms (16) vier Spannungskonzentrationsvertiefungen ist und die Mehrzahl von Spannungskonzentrationsvertiefungen (46) in der zweiten Innenseite des zweiten flexiblen Arms (18) vier Spannungskonzentrationsvertiefungen ist.

6. Verbindung (10) nach Anspruch 1, wobei der längliche Abschnitt zwei gegenüberliegende Laschen (50, 52) beinhaltet.

7. Verbindung (10) nach Anspruch 1, wobei die Verbindung (10) ein einzelnes Stück aus gestanztem Metall ist.

8. Verbindung (10) nach Anspruch 1, wobei:
eine Nase (38) in jeder der Mehrzahl von Spannungskonzentrationsvertiefungen (36) in der ersten Außenseite des ersten flexiblen Arms (16) gebildet ist;
eine Nase (42) in jeder der Mehrzahl von Spannungskonzentrationsvertiefungen (40) in der zweiten Außenseite des zweiten flexiblen Arms (18) gebildet ist;
die Mehrzahl von Spannungskonzentrationsvertiefungen (36) in der ersten Außenseite des ersten flexiblen Arms (16) und die Mehrzahl von Spannungskonzentrationsvertiefungen (40) in der zweiten Außenseite des zweiten flexiblen Arms (18) einander unmittelbar gegenüberliegen; und
die Mehrzahl von Spannungskonzentrationsvertiefungen (44) in der ersten Innenseite des ersten flexiblen Arms (16) und die Mehrzahl von Spannungskonzentrationsvertiefungen (46) in der zweiten Innenseite des zweiten flexiblen Arms (18) einander unmittelbar gegenüberliegen.

9. Verbindung (10) nach Anspruch 8, wobei die Mehrzahl von Spannungskonzentrationsvertiefungen (36) in der ersten Außenseite des ersten flexiblen Arms (16) fünf Spannungskonzentrationsvertiefungen ist und die Mehrzahl von Spannungskonzentrationsvertiefungen (40) in der zweiten Außenseite des zweiten flexiblen Arms (18) fünf Spannungskonzentrationsvertiefungen ist; oder
wobei die Mehrzahl von Spannungskonzentrationsvertiefungen (44) in der ersten Innenseite des ersten flexiblen Arms (16) vier Spannungskonzentrationsvertiefungen ist und die Mehrzahl von Spannungskonzentrationsvertiefungen (46) in der zweiten Innenseite des zweiten flexiblen Arms (18) vier Spannungskonzentrationsvertiefungen ist; oder
wobei der längliche Abschnitt zwei gegenüberliegende Laschen (50, 52) beinhaltet.

## Revendications

1. Lien (10) pour fournir une connexion d'encliquetage entre deux dispositifs, le lien comprenant :
une partie allongée ;
un premier bras flexible (16) couplé à la partie allongée au niveau d'une extrémité et ayant une première fente d'encliquetage (28) au niveau d'une extrémité opposée, le premier bras flexible (16) étant flexible par rapport à la partie allongée, le premier bras flexible (16) incluant un premier côté externe, un premier côté interne, une pluralité d'indentations de concentration de contraintes (36) formées dans le premier côté externe et une pluralité d'indentations de concentration de contraintes (44) formées dans le premier côté interne ; et
un second bras flexible (18) couplé à la partie allongée au niveau d'une extrémité et ayant une seconde fente d'encliquetage (30) au niveau d'une extrémité opposée, le second bras flexible (18) étant flexible par rapport à la partie allongée, le second bras flexible (18) incluant un second côté externe, un second côté interne, une pluralité d'indentations de concentration de contraintes (40) formées dans le second côté externe et une pluralité d'indentations de concentration de contraintes (46) formées dans le second côté interne, dans lequel les premier et second bras flexibles (16, 18) définissent une fente (20) entre eux,
**caractérisé en ce que** la pluralité d'indentations de concentration de contraintes (36) dans le premier côté externe du premier bras flexible (16) et la pluralité d'indentations de concentration de contraintes (44) dans le premier côté interne du premier bras flexible (16) sont décalées les unes par rapport aux autres de sorte qu'une indentation de concentration de contraintes (36) dans le côté externe n'est pas directement à l'opposé, à travers le premier bras flexible (16), d'une indentation de concentration de contraintes (44) dans le côté interne, et dans lequel la pluralité d'indentations de concentration de contraintes (40) dans le second côté externe du second bras flexible (18) et la pluralité d'indentations de concentration de contraintes (46) dans le second côté interne du second bras flexible (18) sont décalées les unes par rapport aux autres de sorte qu'une indentation de concentration de contraintes (40) dans le côté externe n'est pas directement à l'opposé, à travers le second bras flexible (18), d'une indentation de concentration de contraintes (46) dans le côté interne.

2. Lien (10) selon la revendication 1, dans lequel un ergot (38, 42) est formé dans chacune de la pluralité d'indentations de concentration de contraintes (36) dans le premier côté externe du premier bras flexible (16) et chacune de la pluralité d'indentations de concentration de contraintes (40) dans le second côté externe du second bras flexible (18) pour fournir deux rayons dans chacune des indentations.

3. Lien (10) selon la revendication 1, dans lequel les indentations de concentration de contraintes (36) dans le premier côté externe du premier bras flexible (16) et les indentations de concentration de contraintes (40) dans le second côté externe du second bras flexible (18) sont directement à l'opposé les unes des autres et sont espacées de manière égale d'un axe central du lien.

4. Lien (10) selon la revendication 3, dans lequel la totalité des indentations de concentration de contraintes (36, 40) dans le premier côté externe du premier bras flexible (16) et le second côté externe du second bras flexible (18) sont à la même distance de l'axe central ; ou
dans lequel certaines des indentations de concentration de contraintes (36, 40) dans le premier côté externe du premier bras flexible (16) et le second côté externe du second bras flexible (18) qui ne sont pas directement à l'opposé les unes des autres ont des distances différentes de l'axe central.

5. Lien (10) selon la revendication 1, dans lequel la pluralité d'indentations de concentration de contraintes (44) dans le premier côté interne du premier bras flexible (16) et la pluralité d'indentations de concentration de contraintes (46) dans le second côté interne du second bras flexible (18) sont directement à l'opposé les unes des autres ; ou
dans lequel la pluralité d'indentations de concentration de contraintes (36) dans le premier côté externe du premier bras flexible (16) est de cinq indentations de concentration de contraintes et la pluralité d'indentations de concentration de contraintes (40) dans le second côté externe du second bras flexible (18) est de cinq indentations de concentration de contraintes ; ou
dans lequel la pluralité d'indentations de concentration de contraintes (44) dans le premier côté interne du premier bras flexible (16) est de quatre indentations de concentration de contraintes et la pluralité d'indentations de concentration de contraintes (46) dans le second côté interne du second bras flexible (18) est de quatre indentations de concentration de contraintes.

6. Lien (10) selon la revendication 1, dans lequel la partie allongée inclut deux languettes opposées (50, 52).

7. Lien (10) selon la revendication 1, dans lequel le lien (10) est une pièce unique de métal estampé.

8. Lien (10) selon la revendication 1, dans lequel :
un ergot (38) est formé dans chacune de la pluralité d'indentations de concentration de contraintes (36) dans le premier côté externe du premier bras flexible (16) ;
un ergot (42) est formé dans chacune de la pluralité d'indentations de concentration de contraintes (40) dans le second côté externe du second bras flexible (18) ;
la pluralité d'indentations de concentration de contraintes (36) dans le premier côté externe du premier bras flexible (16) et la pluralité d'indentations de concentration de contraintes (40) dans le second côté externe du second bras flexible (18) sont directement à l'opposé les unes des autres ; et
la pluralité d'indentations de concentration de contraintes (44) dans le premier côté interne du premier bras flexible (16) et
la pluralité d'indentations de concentration de contraintes (46) dans le second côté interne du second bras flexible (18) sont directement à l'opposé les unes des autres.

9. Lien (10) selon la revendication 8, dans lequel la pluralité d'indentations de concentration de contraintes (36) dans le premier côté externe du premier bras flexible (16) est de cinq indentations de concentration de contraintes et la pluralité d'indentations de concentration de contraintes (40) dans le second côté externe du second bras flexible (18) est de cinq indentations de concentration de contraintes ; ou
dans lequel la pluralité d'indentations de concentration de contraintes (44) dans le premier côté interne du premier bras flexible (16) est de quatre indentations de concentration de contraintes et la pluralité d'indentations de concentration de contraintes (46) dans le second côté interne du second bras flexible (18) est de quatre indentations de concentration de contraintes ; ou
dans lequel la partie allongée inclut deux languettes opposées (50, 52).
